# EUROPÄISCHE PATENTSCHRIFT

(11) **EP 0 946 453 B1**
(45) Veröffentlichungstag und Bekanntmachung des Hinweises auf die Patenterteilung: **19.12.2001**
(21) Anmeldenummer: 97951180.5
(22) Anmeldetag: 12.11.1997
(51) Int. Cl.: C04B 28/18, C04B 18/14, G21F 1/04

(54) **BAUELEMENTE SOWIE VERFAHREN ZU IHRER HERSTELLUNG UND DEREN VERWENDUNG**
COMPONENTS, METHOD OF PRODUCING THEM, AND THEIR USE
ELEMENT CONSTITUTIF, PROCEDE PERMETTANT DE LE PRODUIRE ET SON UTILISATION

(30) Priorität: 12.11.1996 DE 19646690
(43) Veröffentlichungstag der Anmeldung: 06.10.1999
(73) Patentinhaber: SICOWA Verfahrenstechnik für Baustoffe GmbH & Co. KG, 50126 Bergheim (DE); Thyssen Stahl AG, 47167 Duisburg (DE)
(72) Erfinder: KOSLOWSKI, Thomas, D-52072 Aachen (DE); ENGERT, Hanns-Jörg, D-52072 Aachen (DE)
(74) Vertreter: Zenz, Joachim Klaus, Dipl.-Ing.
(86) Internationale Anmeldenummer: EP9706314
(87) Internationale Veröffentlichungsnummer: WO9821160

(56) Entgegenhaltungen:
- EP-A- 0 172 088
- AT-B- 387 010
- FR-A- 2 104 114
- FR-A- 2 279 204
- CHEMICAL ABSTRACTS, vol. 92, no. 18, 5.Mai 1980 Columbus, Ohio, US; abstract no. 152056k, S. SUZUKI ET AL.: Seite 333; XP000188808 & JP 54 145 730 A (ID.)
- DATABASE WPI Week 7850 Derwent Publications Ltd., London, GB; AN 78-90986a XP002061868 & SU 590 282 A (URALS URALNIISTROMP)
- DATABASE WPI Week 8626 Derwent Publications Ltd., London, GB; AN 86-167134 XP002061869 & JP 61 101 441 A (NIPPON KOKAN KK)
- CHEMICAL ABSTRACTS, vol. 95, no. 26, 28.Dezember 1981 Columbus, Ohio, US; abstract no. 224555j, S. OKADA ET AL.: Seite 303; XP000184528 & JP 56 100 181 A (ID.)

## Beschreibung

Die Erfindung betrifft Bauelemente, insbesondere überschwere Bauelemente und Verfahren zu ihrer Herstellung sowie die Verwendung der Bauelemente.

Vergleichbare Bauelemente, mit denen sich die Erfindung befaßt, sind beispielsweise Kalksandsteine. Kalksandsteine werden hergestellt, indem feinkörniger Sand mit 6 bis 8 % Branntkalk oder Kalkhydrat und Wasser gemischt, die Mischung zu Formkörpern verpreßt und die Formkörper in Härtekesseln dampfgehärtet werden. Es bildet sich ein Calciumhydrosilikat, welches die Sandkörner verkittet. Für Baustoffe, die einer Wärmebehandlung bzw. einer Dampfhärtung unterzogen werden, sind Bindemittel umso wirksamer, je höher ihr Anteil an Calciumsilikaten ist. Es ist daher auch bekannt, zur Herstellung von Bauelementen hydraulische Bindemittel, die Calciumsilikate enthalten, zu verwenden, und zwar bei Herstellungsprozessen, die sowohl ohne Temperaturerhöhung vor sich gehen als auch bei der Herstellung wärmebehandelter und dampfgehärteter Bauelemente.

Demgemäß werden Hüttensteine als Mauersteine dadurch hergestellt, daß Hochofenschlacke, zumeist in Form von granuliertem Hüttensand mit geeigneten hydraulischen Bindemitteln, die Calciumsilikate enthalten, versetzt und nach Formgebung einer Wärmebehandlung unterzogen wird.

Es ist bekannt, Bindemittel aus zementfein aufgemahlener Konverterschlacke herzustellen. In der SU 590 282 wird eine bis auf eine spezifische Oberfläche von 4000 cm²/g gemahlene Konverterschlacke mit feingemahlenem Sand gemischt und zur Herstellung von Steinen oder Betonprodukten eingesetzt.

Die JP 79 145 730 beschreibt ein Gemisch aus pulverisierter Konverterschlacke mit maximalem Freikalkgehalt von 2 M.-% und gemahlenem Flußsand, welches nach Anmischen mit Wasser und nach Formgebung im Autoklaven gehärtet wird.

Ein feinkörniges Bindemittel aus granulierter Hochofenschlacke und Stahlwerksschlacke für durch Wärmebehandlung und/oder Dampfhärtung herzustellende Bauelemente wird in der DE-PS 20 40 484 beschrieben. Dieses Bindemittel kann durch Mahlen von 40 bis 60 Gew.-% Hochofenschlacke und 40 bis 60 Gew. -% Stahlwerksschlacke hergestellt werden. Von den Stahlwerksschlacken werden die SM-und/oder LD-Schlacke bevorzugt. Dem Gemisch können 5 bis 10 Gew.-% Gips oder Anhydrit zugegeben werden. Das Bindemittel wird mit silikatischen Zuschlagstoffen gemischt, das Gemenge Geformt und anschließend einer Dampfhärtung unterzogen.

Die FR 2 279 204 beinhaltet die Verwendung von Stahlwerksschlacke in reiner Form bzw. als Füller oder Zuschlag in verschiedenen Betonen und Kunststoffen zum Zwecke der Abschirmung von radioaktiver Strahlung.

Gemäß der DE-AS 19 15 551 kann gebrochene Siemens-Martin-Schlacke mit einer maximalen Korngröße von 3 mm zur Herstellung einer Dichtungsmasse für wasserbauliche Anlagen Verwendung finden. Man setzt dieser Schlacke hydraulischen Kalk und 25 bis 30 % Wasser zu, um eine pumpbare Masse für die Abdichtung von z.B. Sohlen und Böschungen von Kanälen, Flüssen und Teichen zu erhalten. Dabei wird die SM-Schlacke auf einen Kalkgehalt vcn über 30 % - vorzugsweise über 50 % - gebracht, wobei sich die Prozentangaben auf den Feststoffgehalt der Dichtungsmasse beziehen. Alternativ ist der Zusatz von Tonmehl, Natriumchlorid, Wassergias, Aluminiumsulfat und/oder Trass vorgesehen.

Die DE-OS 39 15 373 schlägt ein Baumaterial für Verkehrsflächen und Gründungen vor. Das Material soll 72 bis 96 M-% Konverterstahlschlacke mit Korngrößen von 0 bis 32 mm und 4 bis 28 M-% Aschen bzw. staub- bis feinkörnige Abfallstoffe der Stahlund Kraftwerke enthalten. Um eine gewünschte Verarbeitbarkeit zu erreichen, wird Wasser zugesetzt und die Mischung in einem Zwangsmischer gemischt. Nach Herstellung des Gemisches im Zwangsmischer erfolgt mittels Kippfahrzeugen der Transport zur Einbaustelle, wo der Baustoff mit Vibrations- und anderen Verdichtungsgeräten zu Schichten von 100 bis 200 mm Dicke verdichtet wird.

Die chemische Zusammensetzung und die mineralische Zusammensetzung von LD-Schlacken werden in der EP 0 034 690 A1 angegeben. Andere Stahlschlacken sind vergleichbar zusammengesetzt.

Die Verwendung von Hochofenschlacke im Straßenbau ist seit langem bekannt. Hochofenschlacke muß, um als Baustoff Verwendung finden zu können, nach dem Abstich abgeschreckt werden, so daß sie glasig erstarrt. In diesem Zustand ist Hochofenschlacke latent hydraulisch, d.h. nach Zugabe eines entsprechenden Hydroxylionen bildenden Anregers kann die Hochofenschlacke hydraulisch erhärten. Diesen Effekt macht man sich bei der Herstellung von Hochofenzementen zunutze, bei denen fein- und feinstgemahlene Hochofenschlacken mit Anregern, im allgemeinen Portlandzement, versetzt werden. Nachteilig bei der Verwendung von Hochofenschlacken ist, daß eine Geruchsbelästigung aufgrund freiwerdender Schwefelverbindungen auftreten kann. Für eine Verwendung im Gebäudebau, wie z.B. in der DE-OS 20 40 484 vorgeschlagen, müssen diese Schlacken aufwendig gereinigt werden.

Schallschutz, insbesondere Körperschallschutz, wird durch ein hohes Flächengewicht der Wand erreicht, das heißt durch eine hohe Rohdichte des Wandbaustoffs oder durch eine entsprechend dicke Wandung. Mit Wandbaustoffen hoher Rohdichte läßt sich Schallschutz und infolge der gleichzeitig vorhandenen hohen Festigkeit auch eine schlankere Wand herstellen.

Im Rahmen von Kosten-Nutzen-Rechnungen hat sich gezeigt, daß ein eher schlanker Wandaufbau der tragenden Wände mit einer für den erforderlichen Wärmeschutz zusätzlich aufgebrachten Thermohaut günstiger ist als eine dickwandige Konstruktion aus porösen Wandbaustoffen, die zwar per se einen gewissen Wärmeschutz, aber geringeren Schallschutz und geringere Festigkeit mitbringen.

Aufgabe der Erfindung ist, Bauelemente hoher Festigkeit herzustellen, die insbesondere zudem eine hohe Schallschutzleistung in einem Mauerwerk bei äußerst geringer Wanddicke erbringen.

Diese Aufgabe wird mit Bauelementen mit den Merkmalen der Ansprüche 1 und 38, sowie dem Verfahren mit den Merkmalen der Ansprüche 8 und 43 gelöst.

Zur Lösung der Aufgabe sieht die Erfindung nach einer Ausführungsform vor, Stahwerksschlacken, insbesondere kalksilikatische Stahlwerksschlacken, insbesondere Konverterschlacken wie sie beim Linz-Donawitz-Verfahren (LD-Schlacken) oder bei der Elektrostahlerzeugung (E-Schlacke) anfallen, zu brechen und daraus ein gestuftes Kornband bzw. eine gestufte Kornverteilung von 0 bis 6 mm dichtester Packung, beispielweise gemäß Fuller-Kurve oder der Litzow-Kurve, herzustellen, und diese gebrochene Schlacke mit einem Anteil von in einem Autoklavprozeß Calciumhydrosilikate bildenden mineralischen Bindemittel, z.B. Calciumhydroxid, Zement, Hüttensand oder dergleichen, das vorzugsweise auch mit dem Schlackenmaterial dabei reagiert und/oder einem feingemahlenen Schlackenprodukt, vorzugsweise feingemahlener Stahlwerksschlacke zu versetzen und die Mischungen nach dem Kalksandstein-Verfahren zu Formkörpern zu verarbeiten, das heißt die Mischungen mit Wasser zu versetzen zur Erzielung einer gewünschte Preßfeuchte, das feuchte Gemisch zu Formkörpern zu pressen und anschließend die Formkörper im Autoklaven in einer Dampfatmosphäre zu härten.

Als Produkt erhält man ein Bauelement, welches überraschenderweise eine Rohdichte aufweist, die weit höher liegt als bei herkömmlichen KS-Steinen der höchsten Rohdichteklasse.

Vorteilhafterweise weist ein solches Produkt ein hohes Schalldämmvermögen und eine sehr hohe Festigkeit auf. Darüber hinaus ist das erfindungsgemäße Bauelement in der Lage, elektromagnetische Strahlungen (z.B. Elektrosmog) abzuschirmen.

Ein weiterer Vorteil des erfindungsgemäßen Bauelements ist, daß es aufgrund seiner hohen Dichte, die auch weit über der von Betonbauteilen liegt, für radioaktive Strahlungen schon bei relativ geringer Dicke nahezu undurchdringlich ist. Hierdurch ist das erfindungsgemäße Bauelement besonders für die Verwendung zum Bau von Kernreaktoren, Teilchenbeschleunigern o.ä. geeignet. Durch die Zugabe bekannter weiterer Schwerzuschlagstoffe kann die Undurchdringlichkeit noch erhöht werden.

Der Rohstoff Stahlwerksschlacke ist ein massenhaft anfallendes relativ wertloses Nebenprodukt, das erfindungsgemäß zu einem wertvollen Produkt verarbeitet werden kann.

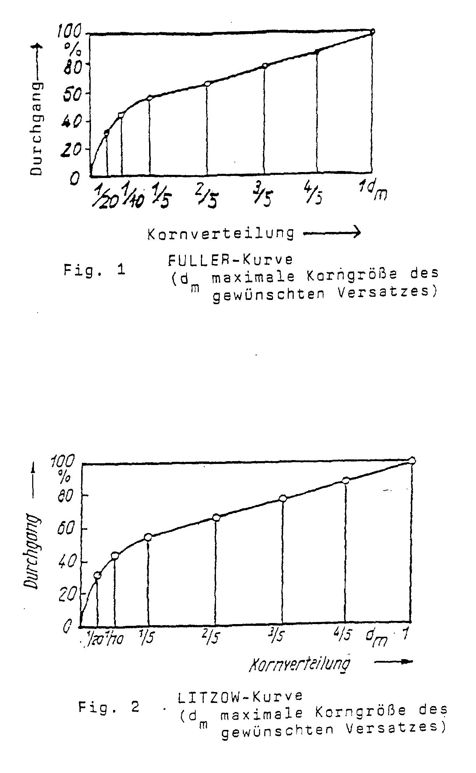

LD- oder E-Ofenschlacke wird für die Zwecke der Erfindung nach dieser Ausführungsform gebrochen und gegebenenfalls nach der Fuller-Kurve (Fig. 1) oder vorzugsweise der Litzow-Kurve (Fig. 2) klassiert derart zusammengestellt, daß für eine dichte Pakkung eine kornabgestufte, gebrochene Schlacke mit einer Kornverteilung z.B. gemäß der oben genannten Kurven vorliegt.

Durch das Brechen werden offenbar ausreichend im Autoklavprozeß reaktive bzw. bindefähige Stoffe wie C₂S-, C₃S- und CaO-Material freigelegt, die mit der zugesetzten Bindemittelkomponente für das Verkitten reagieren können. Bei der Bindemittelkomponente aus gemahlener Stahlwerksschlacke sind durch die Feinmahlung C₂S, C₃S und CaO in ausreichender Menge freigelegt, so daß dieses gemahlene Produkt als Bindemittelkomponente fungieren kann.

Es liegt im Rahmen der Erfindung, auch andere Schlacken, wie Hochofenschlacken, gleichermaßen aufbereitet im Gemenge mit Stahlwerksschlacken zu verwenden. Hochofenschlacke braucht dabei trotz ihrer geruchsbelästigenden Eigenschaft jedoch überraschenderweise keinem sonst üblichen Reinigungsprozeß unterzogen zu werden.

Sofern noch das Siemens-Martin-Verfahren zur Stahlerzeugung angewandt wird, kann auch SM-Schlacke Verwendung finden.

Die klassierte und aus den gestuften Kornfraktionen zusammengesetzte und gemischte Schlacke weist zweckmäßigerweise eine obere Korngröße von 6 mm auf. Die Kornverteilungskurven sollen möglichst dichte Teilchenpackungen ergeben.

Die klassierte Schlacke wird gegebenenfalls gelagert und bei Bedarf mit einem mineralischen Bindemittel, z.B. mit Zement, insbesondere Portlandzement, Hochofenzement, Eisenportlandzement oder dergleichen und/oder Kalkhydrat (Ca(OH)₂) und/oder Hüttensandmehl versetzt. Der Anteil an Schlacke beträgt vorzugsweise 85 bis 98 M-%, vorzugsweise 90 bis 95 M-%; es werden 5 bis 20 M-%, vorzugsweise 5 bis 10 M-% Bindemittel, wie Portlandzement oder Kalkhydrat oder eine Mischung aus beidem, zugegeben.

Die Komponenten werden gemischt und anschließend oder dabei mit 4 bis 8 M-%, vorzugsweise 5 bis 6 M-% Wasser versetzt, so daß eine optimale Preßfeuchte erzielt wird.

Nach dem Mischen und zweckmäßigerweise einer Zwischenlagerung in Reaktoren, erfolgt eine Formgebung auf einer Presse, wobei besonders vorteilhaft ist, daß bereits bekannte Pressen für die Formgebung von Kalksandsteinen verwendbar sind. Der Preßdruck beträgt zweckmäßigerweise 10 bis 25 N/mm², insbesondere 10 bis 20 N/mm². Bei der Verwendung von KS-Pressen sind selbstverständlich alle gängigen Formate von 1 DF bis 20 DF nach DIN 106, Teil 2, herstellbar.

Für komplizierte Formate bzw. Sonderformate oder extrem hohe Dichten können auch isostatische Pressen verwendet werden. Anwendbar ist aber auch das bekannte Stampfverfahren.

Die geformten Rohlinge werden anschließend automatisch oder manuell in bekannter Weise auf Autoklavenwagen oder andere geeignete Einrichtungen gestapelt und in einen Autoklaven gefahren, in dem eine Dampfhärtung, vorzugsweise bei 10 bis 16, insbesondere bei 11 bis 14 bar, vorzugsweise unter Sattdampfatmosphäre bei 160 bis 220°C, vorzugsweise bei 180 bis 200°C, durchgeführt wird. ,

Nach einem besonders günstigen und einfachen Verfahren werden 80 bis 95 M-%, vorzugsweise 85 bis 90 M-% klassierte und für eine gewünschte Packung zusammengestellte Schlacke mit 5 bis 20 M-%, vorzugsweise mit 10 bis 15 M-% eines feingemahlenen Produkts einer Stahlwerksschlacke, insbesondere der gleichen Schlacke mit einer Feinheit von 100 % ≤ 90 µm gemischt. Das Feinstprodukt kann auf einfache Weise durch Abzweigen, z.B. durch Sichten des Produkts gewonnen werden, das in dieser Feinheit beim Brechen anfällt, wenn zum Brechen entsprechende Brechaggregate gewählt werden. Sollte das Produkt noch nicht fein genug sein, kann eine anschließende Feinstmahlung nachgeholt werden. Bei entsprechender Feinheit kann aber zumindest teilweise auch Staub aus der Entstaubungsanlagen des Brechers verwendet werden. Der Fachmann kann ein Brechaggregat wählen und so einstellen, daß gleichzeitig beim Brechen das gestufte, gekörnte Material und das gewünschte Feinstmaterial anfallen. Das Feinstmaterial ersetzt in überraschender Weise ein Bindemittel im Autoklavprozeß. Zudem ist überraschend, daß dabei höhere Rohdichten und höhere Festigkeiten als bei Verwendung bekannter Bindemittel erzielbar sind.

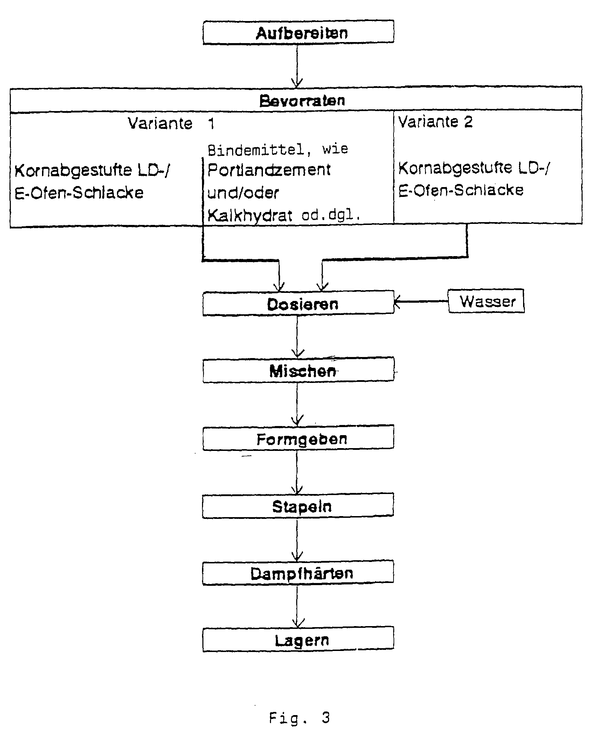

Das gebrochene Produkt wird mit 4 bis 8 M-%, vorzugsweise 5 bis 6 M-% Wasser zum Erreichen der gewünschten Preßfeuchte vermengt. Die feuchte Masse kann in Reaktoren ggf. unter Einfluß von Temperatur gelagert werden. Anschließend wird die Masse, z.B. auf einer KS-Presse zu Formsteinen verpreßt und die Formsteine hydrothermal gehärtet. In Fig. 3 ist ein vereinfachtes Verfahrensschema dargestellt.

Um die Rohdichte auf ein vorgegebenes Maß einzustellen, z.B. abzusenken, können anstelle des Schlackeanteils bekannte silikatische Zuschlagstoffe in Teilmengen zugegeben werden. Zweckmäßigerweise werden die Kornverteilung sowie die minimale und maximale Korngröße der silikatischen Zuschlagstoffe den Korngrößen und der Kornverteilung der Schlacke angepaßt. Eine weitere Möglichkeit, Einfluß auf die Rohdichte zu nehmen, ist die Variation der Kornverteilung der Schlacke bzw. der Kornverteilung der silikatischen Zuschlagstoffe.

Soll der erfindungsgemäße Baustoff in Bereichen eingesetzt werden, in denen eine besonders hohe radioaktive Strahlung auftritt, können die aus dem Betonbau bekannten und üblichen mineralischen Schwerzuschläge anstelle des Schlackeanteils in entsprechenden Teilmengen zugesetzt werden. Dies können z.B. mineralische Bariumverbindungen oder Ferrosilicate sein. Vorzugsweise werden diese speziellen Zuschlagstoffe in ihrer minimalen und maximalen Korngröße sowie ihrer Kornverteilung der minimalen und maximalen Kornverteilung der Baustoffmischung bzw. der Schlacke angepaßt, so daß z.B. gemäß der Fuller- bzw. Litzow-Kurve eine möglichst dichte Packung und damit eine möglichst hohe Rohdichte erreicht wird.

Durch unterschiedliche Bindemittel bzw. Bindemittelmengen (Zement, Ca(OH)₂) und den Feinstanteil < 90 µm lassen sich ebenfalls die Festigkeiten und die Schalldämmung in einem weiten Rahmen variieren.

Bei diesen erfindungsgemäßen Bauelementen können Druckfestigkeiten von z.B.15 bis 55 N/mm² erreicht werden.

Die fertigen Produkte können herkömmlich verfugt oder bei besonders hohen Rohdichten mit Dünnbettmörteln verlegt bzw. vermauert werden. Die erfindungsgemäßen Bauelemente können aber auch nach dem Nut und Feder-Prinzip in Ergänzung mit Dünnbettmörtel verlegt werden. Für eine erforderliche Wärmedämmung eines Mauerwerks wird mit den erfindungsgemäßen-Bauelementen ein zwei- oder mehrschalig ausgeführtes Mauerwerk errichtet. D.h., aus einem Mauerwerk, welches aus den erfindungsgemäßen Bauelementen erstellt wird und einer Vorhähge- bzw. Verblenderschale wird ein Wärmedämm-Verbundsystem geschaffen, wobei die Schalen durch geeignete Dämmstoffe oder durch Luftschichten voneinander getrennt sind. Die Vorhängeschale kann vorzugsweise auch die Funktion eines Nässeschutzes (Schlagregen) übernehmen.

Im folgenden wird die Erfindung anhand zweier Beispiele näher erläutert.

### Beispiel 1:

92 M-% einer E-Ofen-Schlacke mit einem Kornband von 0 bis 4 mm gemäß der Litzow-Kurve wurde mit 8 M-% Kalkhydrat (Ca(OH)₂) gemischt. Die eingestellte Preßfeuchte betrug 6 M-% Wasser. Die Masse wurde mit 20 N/mm² auf einer KS-Presse verpreßt und 8 Stunden bei 12 bar und Sattdampfatmosphäre im Autoklaven dampfgehärtet. Es ergab sich eine Produktrohdichte von 2.750 kg/m³.

### Beispiel 2:

90 M-% eine E-Ofen-Schlacke mit einem Kornband von 0 bis 4 mm gemäß Litzow-Kurve wurde mit 10 M-% der E-Ofen-Schlacke mit einer Feinheit < 90 µm versetzt und beim Mischen eine Preßfeuchte von 5 M-% eingestellt. Die Masse wurde mit einem Preßdruck von 20 N/mm² zu Quadern gespreßt und anschließend im. Autoklaven bei 12 bar und Sattdampfatmosphäre 8 Stunden dampfgehärtet.

Die Rohdichte des fertigen Produkts betrug 2.700 kg/m³.

Das erfindungsgemäße Bauelement zeichnet sich dadurch aus, daß es bei einer hohen Druckfestigkeit von z.B. 15 bis 55 N/mm² eine hohe Rohdichte von z.B. 2.200 bis 2.800, insbesondere 2.400 bis 2.800 kg/m³ aufweist.

Durch die hohe Rohdichte erhält ein aus den erfindungsgemäßen Bauelementen hergestelltes Mauerwerk eine hohe, bisher nicht erreichte flächenbezogene Masse (in kg/m²). Die flächenbezogene Masse (Beiblatt 1 zu DIN 4109) ist für das Schalldämm-Maß, also die Luftschalldämmung innerhalb eines Gebäudes verantwortlich (DIN 4109). Hierdurch ist es möglich, einen sehr hohen Schallschutz bei sehr geringer Mauerwerksdicke zu erreichen. Dies macht das erfindungsgemäße Bauelement auch besonders für die Erstellung von speziellen Schallschutzbauwerken geeignet. Durch die hohe Druckfestigkeit des erfindungsgemäßen Bauelelements können die Wände vorteilhafterweise auch entsprechend dünn ausgeführt werden, so daß die Raumausnutzung bei aus den erfindungsgemäßen Bauelementen erstellten Gebäuden deutlich höher ist als bei Gebäuden aus herkömmlichen Bauelementen, insbesondere porösen Bauelementen wie Tonziegeln.

Ein weiterer Vorteil der erfindungsgemäßen Baustoffe ist, daß durch die besonders hohe Rohdichte, die auch weit über der Dichte von Betonbauteilen liegt, erfindungsgemäße Bauelemente besonders dafür geeignet sind, radioaktive Strahlung bzw. ionisierender Strahlung abzuschirmen. Mit dem erfindungsgemäßen Bauelement kann bei geringerer Wanddicke, d.h. auch bei geringerem Bauaufwand, und insbesondere bei geringeren Kosten als bei Verwendung herkömmlicher Bauelemente, insbesondere Beton, ein höherer Strahlenschutz erreicht werden. Andererseits kann bei Mauerwerken herkömmlicher Dicke unter Verwendung der erfindungsgemäßen Bauelemente ein erhöhter Strahlenschutz gewährleistet werden.

Überraschend hoch ist auch die Abschirmung gegen elektromagnetische Strahlungen durch ein aus erfindungsgemäßen Bauelementen erstelltes Mauerwerk, was möglicherweise auch aus den hohen Gehalten an Metall, insbesondere an Eisen in der Schlacke, resultiert. Dies ist besonders vorteilhaft bei Belastungen eines Gebäudes durch sogenannten "Elektrosmog".

Die LD- und E-Ofen-Schlacke ist ein massenhaft anfallendes industrielles Nebenprodukt der Stahlindustrie, das bislang insbesondere auf dem Baustoffsektor trotz vieler Bemühungen nicht marktgerecht verwertbar war. Nach der Erfindung gelingt es, mit einem besonders einfachen Verarbeitungs- und Herstellungsprozeß ein Produkt zu schaffen, das umweltverträglich ist, hohe Schalldämmung und Festigkeit gewährleistet und zuläßt, wärmegedämmte Mauern zu errichten, indem mehrschalig aufgebaut wird. Trotz der Mehrschaligkeit sind die Mauern preiswerter zu erstellen und bezüglich der Dämmung und Festigkeit den Mauern aus Leichtbauelementen überlegen.

Nach der Erfindung kann durch den Zusatz von kieselsäurehaltigen Stoffen in feingemahlener Form bzw. in Pulverform, wie Quarzmehl, Si-Staub, Traßmehl oder dgl., der Anteil der reaktionsfähigen Kalkkomponenten, insbesondere der Freikalkgehalt (CaO) ausgesteuert werden, wenn z.B. zu viel CaO vorhanden ist. Die zuzusetzende Menge wird auf der Basis der Ermittlung der Menge an im Autoklavprozeß reaktionsfähiger Ca-Komponenten ermittelt.

Nach einer weiteren Ausführungsform der Erfindung wird die kalksilikatische Stahlwerksschlacke vor ihrer Verwendung mit anderen Reaktionspartnern oder vor ihrer Verwendung zur Verarbeitung zu Steinen definiert zerkleinert unter Einwirkung von Wasser konditioniert, derart, daß im wesentlichen lediglich das in der Schlacke vorhandene freie Calciumoxyd und Magnesiumoxyd zum überwiegenden Teil ablöschen bzw. hydratisieren zu Calciumhydroxyd und Magnesiumhydroxyd, während die in der Schlacke vorhandenen Silikate, wie Calciumsilikate nicht bzw. nicht derart hydratisieren, daß sie für eine nachfolgende Autoklavierung nicht mehr als Reaktionspartner zur Bildung von die Verfestigung der Bauelemente bewirkenden Silikathydraten, insbesondere Calciumsilikathydraten zur Verfügung stehen. Diese "Gratwanderung" ist im Rahmen der vorliegenden Erfindung unter bestimmten Bedingungen gelungen, so daß die Stahlwerksschlacke völlig problemlos weiterverwendet werden kann und das sogenannte Kalktreiben, das insbesondere durch die Reaktion des in der Schlacke enthaltenen freien Kalkes zu Calciumhydroxyd bewirkt wird, unterbunden werden kann. Die mit der konditionierten Stahlwerksschlacke hergestellten geformten Produkte werden weder im Autoklavprozeß noch danach durch Rißbildung oder Zerfall infolge Kalktreibens zerstört.

Für das Konditionieren ist es erforderlich, die Schlacke auf Korngrößen von 0 bis 2 mm zu zerkleinern. Vorzugsweise wird auf 0 bis 1 mm, insbesondere auf 0 bis 0,8 mm zerkleinert, wobei das zerkleinerte Produkt zweckmäßigerweise eine normale bzw. stetige Kornverteilung aufweisen soll. Für die Zerkleinerung wird vorzugsweise eine Schlagzerkleinerung gewählt, weil sie eine optimale Freilegung des Freikalks bzw. des freien Magnesiumoxyds bewirkt. Die Kornfeinheit und die Kornverteilung entspricht vorzugsweise der von handelsüblichem, zur Herstellung von Kalksandsteinen verwendbaren Feinsand und sollte weder gröber noch feiner sein, weil andernfalls die gewünschte ablöschende Einwirkung des Wassers nicht gewährleistbar ist.

Sofern bei der Zerkleinerung Eisenbestandteile der Schlacke freigelegt werden, können diese Bestandteile in an sich bekannter Weise abgeschieden und aus dem Aufbereitungsprozeß ausgeschleust und z.B. in einen Stahlerzeugungsprozeß zurückgeführt werden.

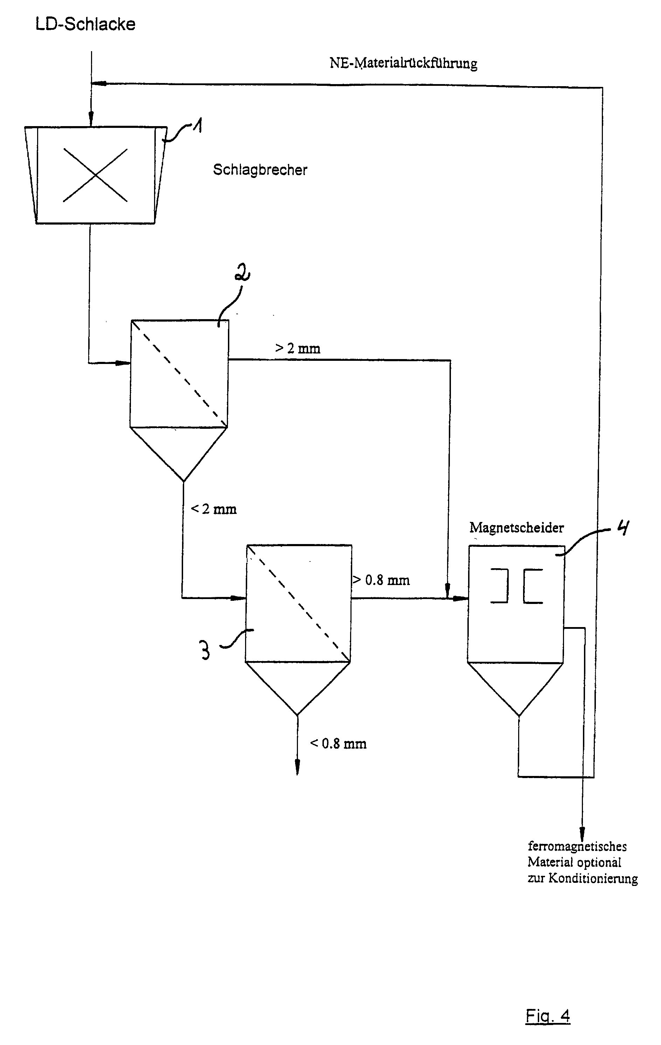

Fig. 4 verdeutlicht beispielhaft die erfindungsgemäße Schlackenaufbereitung einer LD-Schlacke im Fließbild. Die Schlacke wird z.B. mit einer Körnung von 0 bis 35 mm einem Schlagbrecher 1 aufgegeben und gebrochen und gelangt dann auf eine erste Siebanlage 2. Das Korn unter 2 mm wird in eine zweite Siebanlage 3 geleitet und das Korn über 2 mm an einen Magnetscheider 4 abgegeben. Aus der zweiten Siebanlage 3 wird das Korn 0 bis 0,8 mm für die weitergehende Konditionierung abgezogen. Das Korn über 0,8 mm wird ebenfalls in den Magnetscheider 4 eingebracht. Aus dem Magnetscheider wird das ferromagnetische Material verworfen bzw. in den Stahlerzeugungsprozeß rückgeführt. Alles übrige Korn wird nochmals dem Schlagbrecher 1 aufgegeben. Dieser Kreislauf bzw. der gesamte Zerkleinerungsgutstrom wird durch die Pfeile gekennzeichnet.

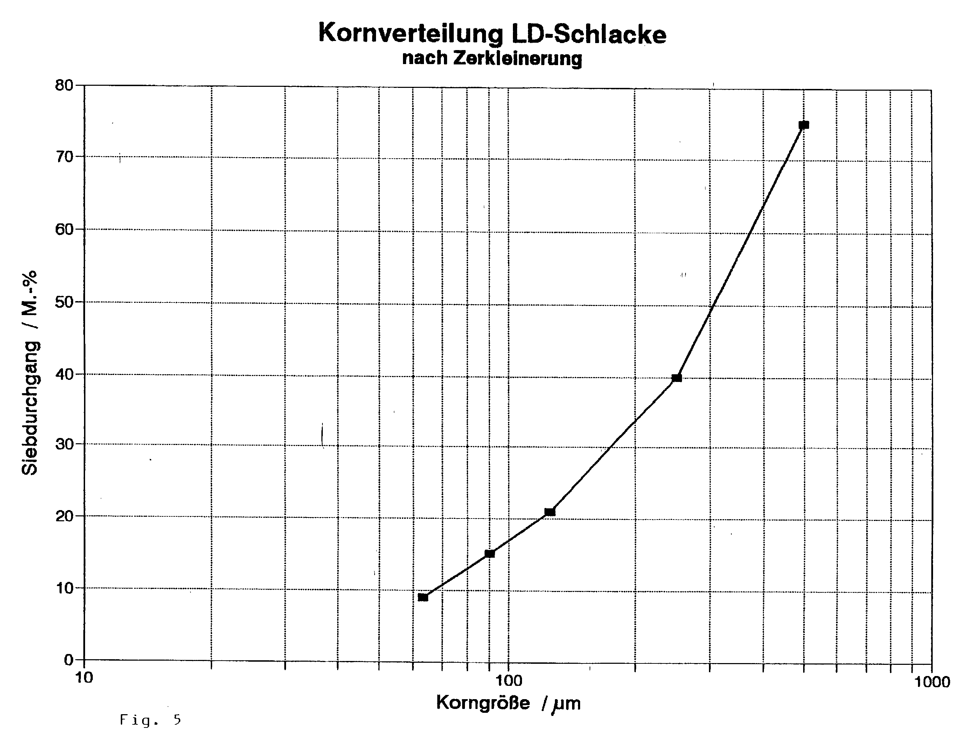

Fig. 5 zeigt eine typische Kornverteilungskurve des brauchbaren Materials, das die in Fig. 4 dargestellte Siebanlage 3 zur weitergehenden Konditionierung verläßt. Dabei ist die Körnungskennlinie bzw. Kornverteilungskurve so gewählt, daß beim Verpressen des Materials zu Bauelementrohlingen eine hohe Rohdichte erzielbar ist.

Das zerkleinerte Material wird anschließend zur weitergehenden Konditionierung hydrothermal unter ausgewählten Hydrothermalbedingungen behandelt. Zweckmäßigerweise wird Sattdampf bis maximal 200°C verwendet. Vorzgusweise wird dabei ein Druck von 8 bis 16 bar eingestellt. Die hydrohtermale Behandlung wird derart durchgeführt, daß lediglich Calciumoxyd und Magnesiumoxyd ablöschen, nicht aber die im nachfolgenden Autoklavprozeß benötigten festigkeitsbildenden Bestandteile der Schlacke wie z.B. die Calciumsilikate unter Bildung von Hydraten, z.B. Calciumsilikathydraten reagieren.

Es hat sich in überraschender Weise herausgestellt, daß Calciumoxyd und Magnesiumoxyd durch das ausgewählte Zerkleinern derart freigelegt werden, daß sie unter Druck in einem Druckgefäß mengenmäßig zu über 95% ablöschen. Die gegebenenfalls noch vorhandenen Reste an Calciumoxyd und Magnesiumoxyd bleiben völlig wirkungslos bei der weiteren Verarbeitung zu hydrothermal gehärteten Bauelementen und nach der bestimmungsgemäßen Verwendung der Bauelemente.

Der Fachmann kann mit wenigen Versuchen ermitteln unter welchen Sattdampfbedingungen und mit welcher Behandlungsdauer der gewünschte Konditioniereffekt abläuft. Normalerweise dauert die Sattdampfbehandlung maximal 4 Stunden. Vorzugsweise wird weniger als 1 Stunde bei den angegebenen Bedingungen behandelt.

Vorzugsweise wird der zerkleinerten Schlacke vor oder während der Sattdampfbehandlung Wasser zugegeben. Zweckmäßigerweise wird Wasser in einer für das Ablöschen des Calciumhydroxyds und des Magnesiumhydroxyds überstöchiometrischen Menge zugegeben. Beispielsweise beträgt die verwendete Wassermenge das 1,1- bis 3-fache, insbesondere das 1,2- bis 1,8-fache der stöchiometrischen Wassermenge. Unter-diesen Bedingungen gelingt es in überraschender Weise auch, das Calciumoxyd in der Schlacke abzulöschen, das bisher nicht ohne weiteres ablöschte. Calciumoxyd (CaO) reagiert bekanntlich normalerweise ohne weiteres im Kontakt mit Wasser durch heftiges Ablöschen. Das in der Stahlwerksschlacke vorliegende Calciumoxyd dagegen reagiert selbst nach dem Freilegen nicht oder nur sehr träge und unvollständig bei Zugabe von Wasser. Dieses Verhalten hat der Verwendung der Schlacke für Baustoffe bisher entgegengestanden. Im Rahmen der Erfindung wurde festgestellt, daß das Calciumoxyd überwiegend manganstabilisiert ist und deshalb nicht unter normalen Bedingungen ablöscht. Bei Verwendung von Sattdampf unter Druck bzw. bei erhöhter Temperatur und überstöchiometrischen Wassermengen in einem Druckgefäß gelingt es, das Calciumoxyd und Magnesiumoxyd und das manganstabilisierte Calciumoxyd besonders effektiv abzulöschen, ohne daß die für die Härtung der Bauelemente im nachfolgenden Autoklavprozeß benötigten Bestandteile "geschädigt" werden und im Autoklavprozeß nicht mehr reaktionsfähig sind.

Die Sattdampfbehandlung des Konditionierprozesses wird zweckmäßigerweise in einem Autoklaven durchgeführt, der auch für die spätere Stein- bzw. Bauelementherstellung verwendbar ist. Dabei wird die gebrochene Schlacke z.B. auf sogenannten Hordenblechen in den Autoklaven eingebracht. Die Sattdampfbehandlung kann aber auch in einem druckfesten Mischbehälter durchgeführt werden, in dem das Wasser-Schlacken-Gemenge während der Sattdampfbehandlung kontinuierlich oder periodisch gemischt wird. Nach der kombinierten Sattdampf-/Mischbehandlung wird das Wasser abgelassen und die konditionierte Schlacke weiterverarbeitet.

Die Bauelement- bzw. Steinherstellung erfolgt zweckmäßigerweise unmittelbar nach der Sattdampfbehandlung und zwar zu einer Zeit, zu der die im Hydrothermalprozeß festigkeitsbildenden reaktiven Bestandteile der gegebenenfalls noch feuchten Schlacke noch nicht bzw. noch nicht weitergehend mit Wasser reagiert haben. Würde man die Schlacke nach der Sattdampfbehandlung längere Zeit lagern, würden diese reaktiven Bestandteile ohne weiteres hydratisieren und für den Hydrothermalprozeß nicht mehr zur Verfügung stehen. Die nach der Sattdampfbehandlung selbständig ablaufende Reaktion der reaktiven Bestandteile kann gegebenenfalls unterbunden oder erheblich vermindert werden, indem getrocknet und danach gegebenenfalls unter Ausschluß von Feuchtigkeit gelagert wird. Eine derartige Trocknung ist jedoch aufwendig und kann die Reaktion nicht völlig unterbinden. Zweckmäßigerweise sollte die konditionierte Schlacke daher nach etwa 2 Stunden verarbeitet und zur Härtung der daraus hergestellten Bauelementrohlinge in den Autoklaven eingefahren sein.

Sofern erforderlich wird die konditionierte Schlacke zur Erzeugung optimaler Kornverteilungen für die Herstellung von geformten Produkten mit bestimmter Rohdichte gesiebt.

Wesentlich ist, daß dieser konditionierten Stahlwerksschlacke für den Autoklavprozeß der geformten Produkte silikatische bzw. SiO₂-haltige Stoffe zugemischt werden, die als Reaktionspartner für den abgelöschten Kalk bzw. das abgelöschte Magnesiumoxyd zur Verfügung gestellt werden. Bevorzugt werden demgemäß Quarzmehl und/oder Flugasche und/oder Hüttensandmehl zugemischt und zwar in Mengen von 5 bis 50 Masse-%, vorzugsweise von 8 bis 30 Masse%, insbesondere von 10 bis 20 Masse-%. Dabei wird die Menge dieser Reaktionsstoffe derart abgestimmt, daß eine nahezu vollständige Reaktion des abgelöschten Kalks und des Magnesiumhydroxyds in festigkeitsbildende Hydrosilikate bzw. Hydratphasen während des Härteprozesses im Autoklaven stattfindet.

Überraschend ist, daß bei den erfindungsgemäßen Bauelementen Festigkeiten erzielbar sind, die über den zu erwartenden Festigkeiten liegen, wenn der Autoklavprozeß so gesteuert wird, daß sich überwiegend Hydrogranatphasen als Verkittungsmaterial zwischen den Schlackenkörnern bilden. Normalerweise werden Kalksandsteine und Porenbetonprodukte derart im Autoklaven gehärtet, daß sich überwiegend Tobermorit als Verkittungsmaterial bildet. Zwar ist die Bildung von Hydrogranatphasen in den bekannten Produkten nicht unbekannt, es wird aber in der Regel angestrebt, sie in den genannten Produkten durch geeignete Maßnahmen zu vermeiden, weil die Hydrogranatphasen die Festigkeit derartiger Produkte mindern. Bei den erfindungsgemäßen Produkten erhöhen die Hydrogranatphasen die Festigkeit im Vergleich zur Festigkeit, die mit Tobermorit erzielbar ist. Eine Erklärung dafür gibt es derzeit noch nicht.

Für die Erzielung hoher Festigkeiten und für die Erzielung einer höheren Dichte bei den erfindungsgemäßen Produkten ist es somit zweckmäßig, die Autoklavbedingungen derart einzustellen, daß eine überwiegende Hydrogranatphasenbildung bewirkt wird. Demgemäß zeichnen sich besonders hochfeste und dichte erfindungsgemäβe Produkte durch einen überwiegenden bzw. nahezu vollständigen Hydrogranatphasenanteil im Verkittungsmaterial aus.

Zur Herstellung der geformten Bauelemente wird das Gemisch aus konditionierter Schlacke und SiO₂-haltigen Stoffen mit Wasser derart vermengt, daß sich eine optimale Preßfeuchte einstellt. Vorzugsweise wird eine Preßfeuchte von 4 bis 10 Masse-%, insbesondere von 6 bis 8 Masse-% Wasser gewählt. Das Pressen wird zweckmäßigerweise in bekannten Kalksandsteinpressen mit Preßdrücken von 15 bis 30 N/mm², vorzugsweise von 18 bis 25 N/mm² bei Haltezeiten von weniger als 20 Sekunden, insbesondere zwischen 11 und 15 Sekunden durchgeführt, so daß eine Rohlings-bzw. Grünlingsrohdichte von 2300 bis 2900 kg/m³, insbesondere von 2400 bis 2800 kg/m³ erzielt werden kann.

Im Anschluß an die Formgebung werden die grünen Steine (auch Grünlinge oder Rohlinge genannt) gegebenenfalls gestapelt und in einen Autoklaven gebracht, in dem sie bei 10 bis 16 bar, vorzugsweise bei 11 bis 14 bar Sattdampf über einen Zeitraum bis zu 10 Stunden, vorzugsweise innerhalb von 6 bis 8 Stunden autoklaviert bzw. hydrothermal gehärtet werden.

Nach dem Härten werden die Bauelemente aus dem Autoklaven gefahren und stehen zur Verbauung zur Verfügung. Sie weisen eine Rohdichte von 2200 bis 2800 kg/m³ und Druckfestigkeiten von 12 bis 60 N/mm² auf. Sie sind dimensionsstabil und verändern ihre Raumform nicht. Beeinträchtigende Hydratphasenbildungen treten nicht mehr auf.

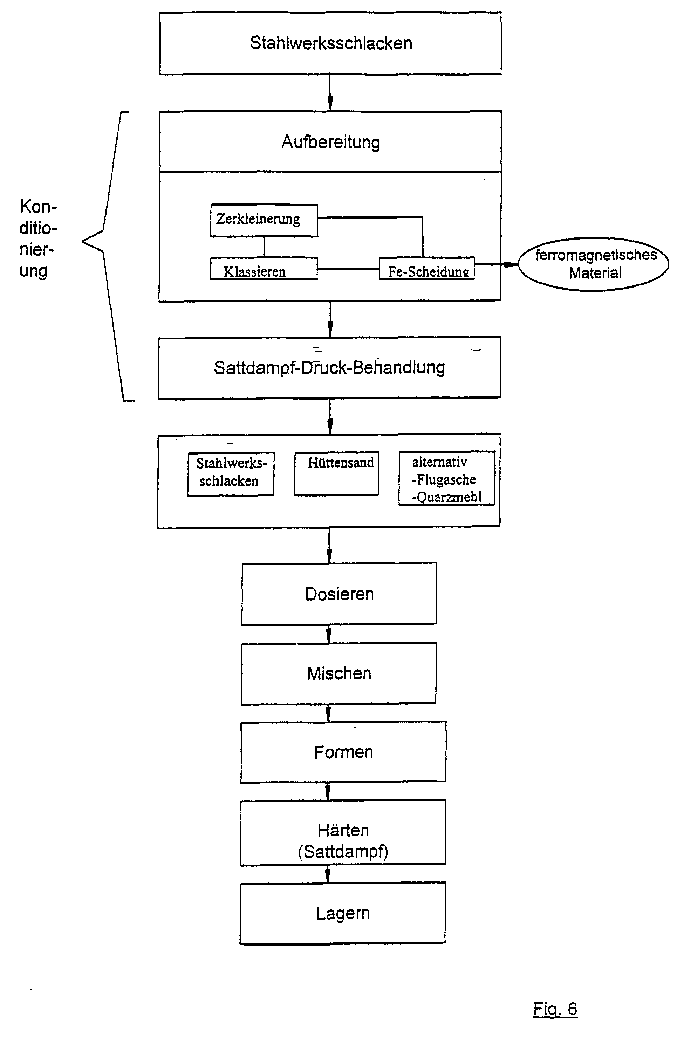

Fig. 6 zeigt schematisch und beispielhaft eine Verfahrensweise zur Herstellung überschwerer Steine aus Stahlwerksschlacken nach der Erfindung. Die Stahlwerksschlacke wird konditioniert, indem sie durch Zerkleinerung aufbereitet und anschließend sattdampfdruckbehandelt wird. Nach dieser Behandlung wird unmittelbar dosiert und der SiO₂-haltige Stoff sowie Wasser dosiert zugemischt. Das Gemisch wird anschließend geformt, gehärtet und gelagert.

Mit den folgenden Beispielen wird die Erfindung näher erläutert:

### Beispiel 3

Eine Mischung von 90 Masse-% konditionierter LD-Schlacke und 10 Masse-% Hüttensandmehl wird zu Steinen im 2DF-Format (240 mm x 115 mm x 113 mm) verpreßt mit folgenden Parametern: 5 Masse-% Preßfeuchte, 26 N/mm² Preßdruck, 2560 kg/m³ Grünlingsrohdichte. Die Grünlinge werden bei 13 bar Sattdampfbedingungen 8 Stunden autoklaviert. Die gehärteten Steine weisen eine Rohdichte von 2480 kg/m³ und eine Druckfestigkeit von 24.5 N/mm² auf.

### Beispiel 4

Eine Mischung von 80 Masse-% konditionierter LD-Schlacke und 20 Masse-% Hüttensandmehl wird zu Steinen im 2DF-Format (240 mm x 115 mm x 113 mm) verpreßt mit folgenden Parametern: 5 Masse-% Preßfeuchte, 30 N/mm² Preßdruck, 2370 kg/m³ Grünlingsrohdichte. Die Grünlinge werden bei 13 bar Sattdampfbedingungen 10 Stunden autoklaviert. Die gehärteten Steine weisen eine Rohdichte von 2320 kg/m³ und eine Druckfestigkeit von 40.7 N/mm² auf.

### Beispiel 5

Eine Mischung von 50 Masse-% konditionierter LD-Schlacke und 50 Masse-% Quarzmehl wird zu Steinen im 2DF-Format (240 mm x 115 mm x 113 mm) verpreßt mit folgenden Parametern:
5 Masse-% Preßfeuchte, 30 N/mm² Preßdruck. Die Grünlinge werden bei 13 bar Sattdampfbedingungen 10 Stunden autoklaviert. Die gehärteten Steine weisen eine Rohdichte von 2200 kg/m³ und eine Druckfestigkeit von 24.0 N/mm² auf.

## Patentansprüche

1. Bauelement in Form eines autoklavgehärteten Formkörpers mit einer Struktur aus Stahlwerksschlacke, insbesondere aus kalksilikatischer Stahlwerksschlacke wie LD-und/oder E-Ofen-Schlacke,
**dadurch gekennzeichnet,**
**daß** die Stahlwerksschlacke gekörnt ist mit einer gestuften Korngrößenzusammenstellung bzw. Korngrößenverteilung hoher Packungsdichte, die vorzugsweise einer Komgrößenverteilung nach der Litzow- oder einer Fuller-Kurve entspricht und im Komband 0 bis 6 mm, vorzugsweise 0 bis 4 mm liegt, wobei die Formkörper eine Rohdichte von 2.200 bis 2.800 kg/m³ aufweisen und die Schlackenkörner über in einem Hydrothermalprozeß gebildete Calciumsilikathydrate fest miteinander verkittet sind.

2. Bauelement nach Anspruch 1, **dadurch gekennzeichnet,**
**daß** es zusätzlich mindestens einen silikatischen Zuschlagstoff in der Struktur aufweist.

3. Bauelement nach Anspruch 2, **dadurch gekennzeichnet,**
**daß** der silikatische Zuschlagstoff eine minimale und maximale Körnung und eine Kornverteilung aufweist, die denen der Stahlwerksschlacke entspricht.

4. Bauelement nach einem oder mehreren der Ansprüche 1 bis 3, **gekennzeichnet durch**
eine Druckfestigkeit von 15 bis 55, insbesondere 20 bis 45 N/mm².

5. Verfahren zur Herstellung von Bauelementen, insbesondere zur Herstellung eines Bauelements nach einem oder mehreren der Ansprüche 1 bis 4, **gekennzeichnet dadurch,**
**daß** Stahlwerksschlacke, mit einer Korngrößenzusammenstellung bzw. Komgrößenverteilung, welche eine hohe Packungsdichte ermöglicht, wie z.B. eine Komgrößenverteilung gemäß der Litzow-Kurve oder der Fuller-Kurve, und
Komgrößen im Komband von 0 bis 6 mm, vorzugsweise von 0 bis 4 mm mit einer mineralischen Bindemittelkomponente gemischt, gepreßt und dampfgehärtet wird.

6. Verfahren nach Anspruch 5, **dadurch gekennzeichnet,**
**daß** der Stahlwerksschlacke silikatische Zuschlagstoffe zugemischt werden.

7. Verfahren nach Anspruch 5 und/oder Anspruch 6, **dadurch gekennzeichnet,**
**daß** die Zuschlagstoffe so gemahlen und klassiert verwendet werden, daß eine Komverteilung und eine minimale und maximale Korngröße erreicht werden, die der Korngröße und der Kornverteilung der Stahlwerksschlacke entsprechen.

8. Verfahren nach einem oder mehreren der Ansprüche 5 bis 7, **dadurch gekennzeichnet,**
**daß** als Bindemittelkomponente Hüttensandmehl mit Anreger oder ohne Anreger, sofern das Gemenge über ausreichende Mengen an Anreger verfügt, verwendet wird.

9. Verfahren nach einem oder mehreren der Ansprüche 5 bis 7, **dadurch gekennzeichnet,**
**daß** als Bindemittelkomponente feingemahlene Stahlwerksschlacke vorzugsweise mit einer Mahlfeinheit < 90 µm verwendet wird.

10. Verfahren nach einem oder mehreren der Ansprüche 5 bis 9, **dadurch gekennzeichnet,**
**daß** das Pressen mit einem Druck von 10 bis 22, insbesondere 15 bis 20 N/mm² durchgeführt wird.

11. Verfahren nach einem oder mehreren der Ansprüche 5 bis 10, **dadurch gekennzeichnet,**
**daß** zum Erzielen einer geeigneten Preßfeuchte 4 bis 8 M.-%, vorzugsweise 5 bis 6 M.-% Wasser zugemischt werden.

12. Verfahren nach einem oder mehreren der Ansprüche 5 bis 11, **dadurch gekennzeichnet,**
**daß** die Dampfhärtung bei für die Kalksandsteinherstellung üblichen Bedingungen für Temperatur, Druck und Zeit durchgeführt wird.

13. Verfahren nach einem oder mehreren der Ansprüche 5 bis 11, **dadurch gekennzeichnet,**
**daß** die Dampfhärtung 6 bis 10 Stunden, vorzugsweise 7 bis 9 Stunden, durchgeführt wird.

14. Verfahren nach einem oder mehreren der Ansprüche 5 bis 13, **dadurch gekennzeichnet,**
**daß** die Dampfhärtung bei einem Druck von 10 bis 16 bar, insbesondere 11 bis 14 bar, durchgeführt wird.

15. Verfahren nach einem oder mehreren der Ansprüche 5 bis 13, **dadurch gekennzeichnet,**
**daß** die Dampfhärtung bei Sattdampfatmosphäre, insbesondere bei Temperaturen von 160 bis 220°C, vorzugsweise bei 180 bis 200°C, durchgeführt wird.

16. Verfahren nach einem oder mehreren der Ansprüche 5 bis 15, **dadurch gekennzeichnet,**
**daß** 85 bis 98 M.-%, vorzugsweise 90 bis 95 M.-% Stahlwerksschlacke mit einem Kornband bis 6 mm, vorzugsweise bis 4 mm, sowie 2 bis 15 M.-%, vorzugsweise 5 bis 10 M.-% Hüttensandmehl verwendet werden.

17. Verfahren nach einem oder mehreren der Ansprüche 5 bis 15, **dadurch gekennzeichnet,**
**daß** 80 bis 95 M.-%, vorzugsweise 85 bis 90 M.-% Stahlwerksschlacke mit einem Komband bis 6 mm, vorzugsweise bis 4 mm, sowie 5 bis 20 M.-%, vorzugsweise 10 bis 15 M.-% feingemahlene Stahlwerksschlacke, vorzugsweise mit einer Feinheit < 90 µm verwendet werden.

18. Verfahren nach einem oder mehreren der Ansprüche 5 bis 17, **dadurch gekennzeichnet,**
**daß** die Stahlwerksschlacke in einem Brechaggregat so gebrochen wird, daß als Produkt eine Stahlwerksschlacke mit einer Korngrößenzusammenstellung gemäß der Litzow- oder der Fuller-Kurve mit einem Kornband von 0 bis 6 mm, vorzugsweise 0 bis 4 mm, vorliegt.

19. Verfahren nach Anspruch 18, **dadurch gekennzeichnet,**
**daß** die Stahlwerksschlacke in einem Brechaggregat so gebrochen wird, daß als Produkt eine Stahlwerksschlacke mit einer Korngrößenzusammenstellung gemäß der Litzow- oder der Fuller-Kurve mit einem Komband 0 bis 6 mm, vorzugsweise 0 bis 4 mm, und ein Feinanteil der Schlacke, vorzugsweise < 90 µm in einer Menge von 5 bis 20 M.-%, vorzugsweise 10 - 15 M.-% vorliegen.

20. Verfahren nach Anspruch 18, **dadurch gekennzeichnet,**
**daß** die gebrochene Stahlwerksschlacke mit einem Sichter klassiert und der Feinanteil abgetrennt wird, wobei der Feinanteil, soweit er vorzugsweise eine Feinheit < 90 µm aufweist, der gebrochenen Schlacke zur Herstellung der Bauelemente in einer bestimmten Menge als Bindemittelkomponente zudosiert wird.

21. Verfahren nach Anspruch 20, **dadurch gekennzeichnet,**
**daß** der abgetrennte Feinanteil z.B. auf eine Feinheit < 90 µm weiter aufgemahlen und in einer bestimmten Menge der gebrochenen Stahlwerksschlacke als Bindemittelkomponente zudosiert wird.

22. Verfahren nach einem oder mehreren der Ansprüche 18 bis 21, **dadurch gekennzeichnet,**
**daß** der Staub aus der Mühlen- oder Brecherentstaubung, insbesondere der mit einer Feinheit < 90 µm der gebrochenen Stahlwerksschlacke als Bindemittelkomponente zudosiert wird.

23. Verfahren nach einem oder mehreren der Ansprüche 5 bis 22, **dadurch gekennzeichnet,**
**daß** ein feinteiliger kieselsäurehaltiger Stoff in Pulverform, insbesondere ein im Autoklavprozeß reagierender Stoff, zur Aussteuerung eines gegebenenfalls vorhandenen überschüssigen reaktionsfähigen Kalkkomponentenanteils zugesetzt wird.

24. Verwendung von Bauelementen nach einem oder mehreren der Ansprüche 1 bis 4
und/oder hergestellt nach einem Verfahren gemäß einem oder mehreren der Ansprüche 5 bis 23, **dadurch gekennzeichnet, daß** die Bauelemente zum Erstellen von Gebäuden verwendet werden.

25. Verwendung von Bauelementen nach einem oder mehreren der Ansprüche 1 bis 4 und/oder hergestellt nach einem Verfahren gemäß einem oder mehreren der Ansprüche 5 bis 23, **dadurch gekennzeichnet,**
**daß** die Bauelemente zum Erstellen von Schallschutzbauwerken im Bereich Straßen, Flughäfen oder Industrieanlagen oder dgl. verwendet werden.

26. Verwendung von Bauelementen nach einem oder mehreren der Ansprüche 1 bis 4 und/oder hergestellt nach einem Verfahren gemäß einem oder mehreren der Ansprüche 5 bis 23, **dadurch gekennzeichnet,**
**daß** die Bauelemente zum Abschirmen von elektromagnetischer Strahlung verwendet werden.

27. Verwendung von Bauelementen nach einem oder mehreren der Ansprüche 1 bis 4 und/oder hergestellt nach einem Verfahren gemäß einem oder mehreren der Ansprüche 5 bis 23, **dadurch gekennzeichnet,**
**daß**, insbesondere zu Wärmedämmzwecken, die Bauelemente zum Erstellen von zwei- oder mehrschaligen Wänden verwendet werden, wobei ein Mauerwerk, welches aus den Bauelementen erstellt wird, mit einer Vorhänge- bzw. Verblenderschale für ein Wärmedämm-Verbundsystem kombiniert wird, wobei die Schalen vorzugsweise durch geeignete Dämmstoffe oder durch Luftschichten voneinander getrennt sind.

28. Bauelement in Form eines autoklavgehärteten Formkörpers mit einer Struktur aus Stahlwerksschlacke, insbesondere aus kalksilikatischer Stahlwerksschlacke wie LD-und/oder E-Ofen-Schlacke, **dadurch gekennzeichnet,**
**daß** die Stahlwerksschlacke eine Korngrößenzusammenstellung hoher Packungsdichte aufweist, wobei die Formkörper eine Rohdichte von 2.200 bis 2.800 kg/m³ aufweisen und die Schlackenkörner über in einem Hydrothermalprozeß gebildete Hydrogranatphasen fest miteinander verkittet sind.

29. Bauelement nach Anspruch 28, **gekennzeichnet durch**
Schlackenkomgrößen von 0 bis 2 mm, vorzugsweise von 0 bis 1mm, insbesondere von 0 bis 0,8 mm.

30. Bauelement nach Anspruch 29, **gekennzeichnet durch**
eine normale bzw. stetige Kornverteilung der Schlackenkörner.

31. Bauelement nach einem oder mehreren der Ansprüche 28 bis 30, **gekennzeichnet durch**
Druckfestigkeiten von 12 bis 60 N/mm².

32. Verfahren zur Herstellung von Bauelementen, insbesondere zur Herstellung eines Bauelements nach einem oder mehreren der Ansprüche 28 bis 31, **dadurch gekennzeichnet,**
**daß** die Stahlwerksschlacke auf Korngrößen von 0 bis 2 mm, insbesondere 0 bis 1 mm, vorzugsweise 0 bis 0,8 mm zerkleinert und
anschließend in einer Sattdampfatmosphäre unter erhöhter Temperatur und Druck derart behandelt wird, daß das freie Calciumoxid und Magnesiumoxid ablöschen, während die anderen hydratisierbaren Bestandteile nahezu unhydratisiert bleiben und
**daß** anschließend die derart konditionierte Schlacke mit einem mehifeinen SiO₂-enthaltenden Material sowie Wasser vermischt,
die Mischung geformt und
die daraus resultierenden Formkörper autoklaviert werden.

33. Verfahren nach Anspruch 32, **dadurch gekennzeichnet,**
**daß** die Sattdampfbehandlung bis maximal 200°C durchgeführt wird.

34. Verfahren nach Anspruch 32 und/oder 33, **dadurch gekennzeichnet,**
**daß** die Sattdampfbehandlung unter Druck von 8 bis 16 bar durchgfeührt wird.

35. Verfahren nach einem oder mehreren der Ansprüche 32 bis 34, **dadurch gekennzeichnet,**
**daß** die Sattdampfbehandlung derart durchgeführt wird, daß über 95% des freien Calciumoxids abgelöscht haben.

36. Verfahren nach einem oder mehreren der Ansprüche 32 bis 35, **dadurch gekennzeichnet,**
**daß** der Schlacke vor und/oder während der Sattdampfbehandlung Wasser zugegeben wird.

37. Verfahren nach Anspruch 36, **dadurch gekennzeichnet,**
**daß** Wasser in überstöchiometrischer Menge zugegeben wird.

38. Verfahren nach Anspruch 37, **dadurch gekennzeichnet,**
**daß** eine Wassermenge verwendet wird, die dem 1,1- bis 3-fachen, insbesondere dem 1,2- bis 1,8-fachen der stöchiometrischen Wassermenge entspricht.

39. Verfahren nach einem oder mehreren der Ansprüche 32 bis 38, **dadurch gekennzeichnet,**
**daß** die Sattdampfbehandlung in einem Autoklaven durchgeführt wird.

40. Verfahren nach einem oder mehreren der Ansprüche 32 bis 38, **dadurch gekennzeichnet,**
**daß** die Sattdampfbehandlung in einem druckfesten Mischbehälter durchgeführt wird, wobei ständig oder periodisch gemischt wird.

41. Verfahren nach einem oder mehreren der Ansprüche 32 bis 40, **dadurch gekennzeichnet,**
**daß** unmittelbar nach der Sattdampfbehandlung die konditionierte Schlacke weiterverarbeitet wird durch Zumischen mindestens eines SiO₂-haltigen Stoffes und Wasser sowie Pressen und Autoklavieren.

42. Verfahren nach einem oder mehreren der Ansprüche 32 bis 41, **dadurch gekennzeichnet,**
**daß** der Schlacke Quarzmehl und/oder Flugasche und/oder Hüttensandmehl vorzugsweise in Mengen von 5 bis 50 Masse-%, insbesondere von 8 bis 30 Maase-%, vornehmlich von 10 bis 20 Masse-% zugegeben werden.

43. Verfahren nach einem oder mehreren der Ansprüche 32 bis 42, **dadurch gekennzeichnet,**
**daß** die grünen Steine bei 10 bis 16 bar, vorzugsweise bei 11 bis 14 bar Sattdampf gehärtet werden.

44. Verfahren nach Anspruch 43, **dadurch gekennzeichnet,**
**daß** bis zu 10 Stunden, vorzugsweise innerhalb 6 bis 8 Stunden autoklaviert wird.

## Claims

1. Building element in the form of an autoclave-hardened moulded body with a structure of steelworks slag, particularly calcium silicate steelworks slag, such as Linz-Donawitz slag and/or electric furnace slag, **characterised in that** the steelworks slag is granular with a graded grain size composition or grain size distribution of high packing density, which preferably corresponds to a grain size distribution in accordance with the Litzow or a Fuller curve and lies in the grain size range of of 0 to 6 mm, preferably 0 to 4 mm, the moulded bodies having a gross density of 2200 to 2800 kg/m³ and the slag grains being firmly cemented together by means of calcium silicate hydrates formed in a hydrothermal process.

2. Building element as claimed in Claim 1, **characterised in that** it additionally has at least one silicate additive in the structure.

3. Building element as claimed in Claim 2, **characterised in that** the silicate additive has a minimum and maximum grain size and a grain distribution which corresponds to those of the steelworks slag.

4. Building element as claimed in one or more of Claims 1 to 3, **characterised by** a compression strength of 15 to 55, particularly 20 to 45 N/mm².

5. Method of manufacturing building elements, particularly for manufacturing a building element as claimed in one or more of Claims 1 to 4, **characterised in that** steelworks slag with a grain size composition or grain size distribution, which enables a high packing density, such as a grain size distribution in accordance with the Litzow curve or the Fuller curve, and grain sizes in the grain size range of 0 to 6 mm, preferably 0 to 4 mm, is mixed with a mineral bonding agent component, pressed and steam hardened.

6. Method as claimed in Claim 5, **characterised in that** silicate additives are mixed into the steelworks slag.

7. Method as claimed in Claim 5 and/or Claim 6, **characterised in that** the additives are so ground and classified that a grain size distribution and a minimum and maximum grain size are achieved, which correspond to the grain size and the grain size distribution of the steelworks slag.

8. Method as claimed in one or more of Claims 5 to 7, **characterised in that** foundry sand powder is used as the bonding agent component with an activator or without an activator, so long as the mixture has sufficient amounts of activator.

9. Method as claimed in one or more of Claims 5 to 7, **characterised in that** finely ground steelworks slag is used as the bonding agent component, preferably with a grinding fineness < 90 µm.

10. Method as claimed in one or more of Claims 5 to 9, **characterised in that** the pressing is performed with a pressure of 10 to 22, particularly 15 to 20 N/mm².

11. Method as claimed in one or more of Claims 5 to 10, **characterised in that** in order to achieve a suitable pressed water content of 4 to 8 mass%, preferably 5 to 6 mass% water is mixed in.

12. Method as claimed in one or more of Claims 5 to 11, **characterised in that** the steam hardening is performed under conditions relating to temperature, pressure and time which are conventional for the manufacture of sand-lime bricks.

13. Method as claimed in one or more of Claims 5 to 11, **characterised in that** the steam hardening is performed for 6 to 10 hours, preferably 7 to 9 hours.

14. Method as claimed in one or more of Claims 5 to 13, **characterised in that** the steam hardening is performed at a pressure of 10 to 18 bar, particularly 11 to 14 bar.

15. Method as claimed in one or more of Claims 5 to 13, **characterised in that** the steam hardening is performed under a saturated steam atmosphere, particularly at temperatures of 160 to 220°C, preferably at 180 to 200°C.

16. Method as claimed in one or more of Claims 5 to 15, **characterised in that** 85 to 98 mass%, preferably 90 to 95 mass%, steelworks slag with a grain size range of up to 6 mm, preferably up to 4 mm, and 2 to 5 mass%, preferably 5 to 10 mass%, foundry sand powder are used.

17. Method as claimed in one or more of Claims 5 to 15, **characterised in that** 80 to 95% mass%, preferably 85 to 90 mass%, steelworks slag with a grain size range of up to 6 mm, preferably up to 4 mm, preferably 5 to 20 mass%, preferably 10 to 15 mass%, finely ground steelworks slag, preferably with a fineness < 90 mm, are used.

18. Method as claimed in one or more of Claims 5 to 17, **characterised in that** the steelworks slag is so crushed in a crushing unit that a steelworks slag with a grain size composition in accordance with the Litzow or the Fuller curve with a grain size range of 0 to 6 mm, preferably 0 to 4 mm, is present as the product.

19. Method as claimed in Claim 18, **characterised in that** the steelworks slag is so crushed in a crushing unit that a steelworks slag with a grain size composition in accordance with the Litzow or the Fuller curve with a grain size range of 0 to 6 mm, preferably 0 to 4 mm, and a fine component of the slag, preferably < 90 µm, in an amount of 5 to 20 mass%, preferably 10-15 mass%, are present as the product.

20. Method as claimed in Claim 18, **characterised in that** the crushed steelworks slag is classified with a grader and the fine component separated, whereby the fine component, insofar as it has preferably a fineness < 90 µm, of the crushed slag is added in a predetermined amount as a bonding agent component to manufacture the building elements.

21. Method as claimed in Claim 20, **characterised in that** the separated fine component is further ground, e.g. to a fineness < 90 µm, and is added in a predetermined amount to the crushed steelworks slag as a bonding agent component.

22. Method as claimed in one or more of Claims 18 to 21, **characterised in that** the dust from the mill or crusher dust removal system, particularly that with a fineness < 90 µm of the crushed steelworks slag, is added as the bonding agent component.

23. Method as claimed in one or more of Claims 5 to 22, **characterised in that** a finely divided silica-containing material in dust form, particularly a substance reacting in the autoclave process, is added to control a potentially excessive amount of a reactive lime component content.

24. Use of building elements as claimed in one or more of Claims 1 to 4 and/or manufactured by a method in accordance with one or more of Claims 5 to 23, **characterised in that** the building elements are used for the production of buildings.

25. Use of building elements as claimed in one or more of Claims 1 to 4 and/or manufactured by a method in accordance with one or more of Claims 5 to 23, **characterised in that** the building elements are used for the production of noise insulating structures in the vicinity of roads, airports, industrial installations or the like.

26. Use of building elements as claimed in one or more of Claims 1 to 4 and/or manufactured by a method in accordance with one or more of Claims 5 to 23, **characterised in that** the building elements are used for shielding electromagnetic radiation.

27. Use of building elements as claimed in one or more of Claims 1 to 4 and/or manufactured by a method in accordance with one or more of Claims 5 to 23, **characterised in that**, particularly for thermal insulation purposes, the building elements are used for the production of two- or multi-shell walls, whereby brickwork, which is made of the building elements, is combined with a curtain or facing shell for a thermal insulation composite system, wherein the shells are preferably separated from one another by suitable insulating materials or by air layers.

28. Building element in the form of an autoclave-hardened moulded body with a structure comprising steelworks slag, particularly of calcium silicate steelworks slag, such as Linz-Donawitz and/or electric furnace slag, **characterised in that** the steelworks slag has a grain size composition of high packing density, wherein the moulded bodies have a bulk density of 2200 to 2800 kg/m³ and the slag grains are firmly cemented together by means of hydrogarnet phases formed in a hydrothermal process.

29. Building element as claimed in Claim 28, **characterised by** slag grain sizes of 0 to 2 mm, preferably 0 to 1 mm, particularly 0 to 0.8 mm.

30. Building element as claimed in Claim 29, **characterised by** a normal or constant grain distribution of the slag grains.

31. Building element as claimed in one or more of Claims 28 to 30, **characterised by** compression strengths of 12 to 60 N/mm².

32. Method of manufacturing building elements, particularly of manufacturing a building element as claimed in one or more of Claims 28 to 31, **characterised in that** the steelworks slag is comminuted to grain sizes of 0 to 2 mm, particularly 0 to 1 mm, preferably 0 to 0.8 mm and is subsequently treated in a saturated steam atmosphere under increased temperature and pressure so that the free calcium oxide and magnesium oxide are slaked whilst the other hydratable components remain nearly unhydrated and that subsequently the slag conditioned in this manner is mixed with a material containing fine powdery SiO₂ and water, the mixture is moulded and the moulded bodies resulting therefrom are autoclaved.

33. Method as claimed in Claim 32, **characterised in that** the saturated steam treatment is performed at a maximum of 200°C.

34. Method as claimed in Claim 32 and/or 33, **characterised in that** the saturated steam treatment is performed under a pressure of 8 to 16 bar.

35. Method as claimed in one or more of Claims 32 to 34, **characterised in that** the saturated steam treatment is so performed that over 95% of the free calcium oxide is slaked.

36. Method as claimed in one or more of Claims 32 to 35, **characterised in that** water is added to the slag before and/or during the saturated steam treatment.

37. Method as claimed in Claim 36, **characterised in that** water is added in a superstoichiometric amount.

38. Method as claimed in Claim 37, **characterised in that** an amount of water is used which corresponds to 1.1 to 3 times, particularly 1.2 to 1.8 times, the stoichiometric amount of water.

39. Method as claimed in one or more of Claims 32 to 38, **characterised in that** the saturated steam treatment is performed in an autoclave.

40. Method as claimed in one or more of Claims 32 to 38, **characterised in that** the saturated steam treatment is performed in a pressure resistant mixing container in which mixing is performed constantly or periodically.

41. Method as claimed in one or more of Claims 32 to 40, **characterised in that** directly after the saturated steam treatment the conditioned slag is further processed by adding at least one SiO₂-containing material and water and pressing and autoclaving.

42. Method as claimed in one or more of Claims 32 to 41, **characterised in that** powdered quartz and/or flyash and/or foundry sand powder, preferably in amounts of 5 to 50 mass%, particularly 8 to 30 mass%, especially 10 to 30 mass%, is added to the slag.

43. Method as claimed in one or more of Claims 32 to 42, **characterised in that** the green bricks are hardened with 10 to 16 bar, preferably 11 to 14 bar, saturated steam.

44. Method as claimed in Claim 43, **characterised in that** the autoclaving is performed for up to 10 hours, preferably within 6 to 8 hours.

## Revendications

1. Elément de construction formé d'un corps façonné durci à l'autoclave ayant une structure en laitier d'aciérie, en particulier en laitier d'aciérie silico-calcique tel que laitier LD et/ou de four électrique, **caractérisé par le fait que** le laitier d'aciérie est granulé avec une composition granulométrique ou répartition granulométrique étagée à haute densité de remplissage qui correspond de préférence à une répartition granulométrique suivant la courbe de Litzow ou une courbe de Fuller et se situe dans la bande granulaire 0 à 6 mm, de préférence 0 à 4 mm, les corps façonnés ayant une masse volumique apparente de 2200 à 2800 kg/m³ et les grains de laitier étant solidement cimentés les uns aux autres par des silicates de calcium hydratés formés dans un processus hydrothermique.

2. Elément de construction selon la revendication 1, **caractérisé par le fait qu'**il présente en plus dans la structure au moins un granulat de silicates.

3. Elément de construction selon la revendication 2, **caractérisé par le fait que** le granulat de silicates présente une dimension minimale et une dimension maximale et une répartition granulométrique qui correspondent à celles du laitier d'aciérie.

4. Elément de construction selon une ou plusieurs des revendications 1 à 3, **caractérisé par** une résistance à la compression de 16 à 55, en particulier 20 à 45 N/mm².

5. Procédé de fabrication d'éléments de construction, en particulier d'un élément de construction selon une ou plusieurs des revendications 1 à 4, **caractérisé par le fait que** du laitier d'aciérie ayant une composition granulométrique ou répartition granulométrique qui permet une haute densité de remplissage, comme par exemple une répartition granulométrique suivant la courbe de Litzow ou la courbe de Fuller, et des grosseurs de grain dans la bande granulaire de 0 à 6 mm, de préférence de 0 à 4 mm, est mélangé avec un constituant liant minéral et est comprimé et durci à la vapeur.

6. Procédé selon la revendication 5, **caractérisé par le fait qu'**au laitier d'aciérie sont mélangés des granulats de silicates.

7. Procédé selon la revendication 5 et/ou la revendication 6, **caractérisé par le fait que** les granulats sont utilisés broyés et classés de façon que soient obtenues une répartition granulométrique et une grosseur de grain minimale et une grosseur de grain maximale qui correspondent à la grosseur de grain et à la répartition granulométrique du laitier d'aciérie.

8. Procédé selon une ou plusieurs des revendications 5 à 7, **caractérisé par le fait que** comme constituant liant est utilisée de la farine de sable de laitier avec activant ou sans activant si le mélange contient des quantités suffisantes d'activant.

9. Procédé selon une ou plusieurs des revendications 5 à 7, **caractérisé par le fait que** comme constituant liant est utilisé du laitier d'aciérie finement broyé de préférence à une finesse inférieure à 90 microns.

10. Procédé selon une ou plusieurs des revendications 5 à 9, **caractérisé par le fait que** la compression est effectuée avec une pression de 10 à 22, en particulier de 15 à 20 N/mm2.

11. Procédé selon une ou plusieurs des revendications 5 à 10, **caractérisé par le fait que** pour l'obtention d'une humidité de compression appropriée sont ajoutés 4 à 8 % en masse, de préférence 5 à 6 % en masse d'eau.

12. Procédé selon une ou plusieurs des revendications 5 à 11, **caractérisé par le fait que** le durcissement à la vapeur est effectué dans des conditions de température, de pression et de temps usuelles pour la fabrication de briques silico-calcaires.

13. Procédé selon une ou plusieurs des revendications 5 à 11, **caractérisé par le fait que** le durcissement à la vapeur est effectué pendant 6 à 10 heures, de préférence 7 à 9 heures.

14. Procédé selon une ou plusieurs des revendications 5 à 13, **caractérisé par le fait que** le durcissement à la vapeur est effectué à une pression de 10 à 16 bar, en particulier 11 à 14 bar.

15. Procédé selon une ou plusieurs des revendications 5 à 13, **caractérisé par le fait que** le durcissement à la vapeur est effectué en atmosphère de vapeur saturée, en particulier à des températures de 160 à 220 °C, de préférence à 180 à 200 °C.

16. Procédé selon une ou plusieurs des revendications 5 à 15, **caractérisé par le fait qu'**il est utilisé 85 à 98 % en masse, de préférence 90 à 95 % en masse de laitier d'aciérie ayant une bande granulaire jusqu'à 6 mm, de préférence jusqu'à 4 mm, et 2 à 15 % en masse, de préférence 5 à 10 % en masse de farine de sable de laitier.

17. Procédé selon une ou plusieurs des revendications 5 à 15, **caractérisé par le fait qu'**il est utilisé 80 à 95 % en masse, de préférence 85 à 90 % en masse de laitier d'aciérie ayant une bande granulaire jusqu'à 6 mm, de préférence jusqu'à 4 mm, et 5 à 20 % en masse, de préférence 10 à 15 % en masse de laitier d'aciérie finement broyé, de préférence à une finesse inférieure à 90 microns.

18. Procédé selon une ou plusieurs des revendications 5 à 17, **caractérisé par le fait que** le laitier d'aciérie est concassé dans un dispositif de concassage de façon que soit obtenu comme produit un laitier d'aciérie ayant une composition granulométrique suivant la courbe de Litzow ou la courge de Fuller avec une bande granulaire de 0 à 6 mm, de préférence 0 à 4 mm.

19. Procédé selon la revendication 18, **caractérisé par le fait que** le laitier d'aciérie est concassé dans un dispositif de concassage de façon que soient obtenus comme produit un laitier d'aciérie ayant une composition granulométrique suivant la courbe de Litzow ou la courbe de Fuller avec une bande granulaire de 0 à 6 mm, de préférence 0 à 4 mm, et une partie fine du laitier, de préférence inférieure à 90 microns, en une quantité de 5 à 20 % en masse, de préférence 10 à 15 % en masse.

20. Procédé selon la revendication 18, **caractérisé par le fait que** le laitier d'aciérie concassé est classé avec un séparateur à air et la partie fine est séparée, la partie fine, si elle présente de préférence une finesse inférieure à 90 microns, étant ajoutée en une quantité déterminée comme constituant liant au laitier concassé pour la fabrication des éléments de construction.

21. Procédé selon la revendication 20, **caractérisé par le fait que** la partie fine séparée est de nouveau broyée par exemple à une finesse inférieure à 90 microns et ajoutée en une quantité déterminée comme constituant liant au laitier d'aciérie concassé.

22. Procédé selon une ou plusieurs des revendications 18 à 21, **caractérisé par le fait que** la poussière provenant du dépoussiérage de broyeurs ou de concasseurs, en particulier celle d'une finesse inférieure à 90 microns, est ajoutée comme constituant liant au laitier d'aciérie concassé.

23. Procédé selon une ou plusieurs des revendications 5 à 22, **caractérisé par le fait qu'**une matière à éléments fins contenant de la silice, sous forme de poudre, en particulier une matière réagissant dans le processus à l'autoclave, est ajoutée pour le réglage d'une partie constituant calcaire réactive en excès existant éventuellement.

24. Utilisation d'éléments de construction selon une ou plusieurs des revendications 1 à 4 et/ou fabriqués par un procédé selon une ou plusieurs des revendications 5 à 23, **caractérisée par le fait que** les éléments de construction sont utilisés pour la construction de bâtiments.

25. Utilisation d'éléments de construction selon une ou plusieurs des revendications 1 à 4 et/ou fabriqués par un procédé selon une ou plusieurs des revendications 5 à 23, **caractérisée par le fait que** les éléments de construction sont utilisés pour la construction d'ouvrages de protection contre le bruit dans la zone de routes, d'aéroports, d'installations industrielles ou de lieux semblables.

26. Utilisation d'éléments de construction selon une ou plusieurs des revendications 1 à 4 et/ou fabriqués par un procédé selon une ou plusieurs des revendications 5 à 23, **caractérisée par le fait que** les éléments de construction sont utilisés pour la protection contre les rayonnements électromagnétiques.

27. Utilisation d'éléments de construction selon une ou plusieurs des revendications 1 à 4 et/ou fabriqués par un procédé selon une ou plusieurs des revendications 5 à 23, **caractérisée par le fait qu'**en particulier aux fins d'isolation thermique, les éléments de construction sont utilisés pour la construction de murs à deux ou plus de deux parois, une maçonnerie construite avec les éléments de construction étant combinée avec une paroi rideau ou parement pour un système composé d'isolation thermique, les parois étant de préférence séparées les unes des autres par des matériaux isolants appropriés ou par des couches d'air.

28. Elément de construction formé d'un corps façonné durci à l'autoclave ayant une structure en laitier d'aciérie, en particulier en laitier d'aciérie silico-calcique tel que laitier LD et/ou de four électrique, **caractérisé par le fait que** le laitier d'aciérie présente une composition granulométrique à haute densité de remplissage, les corps façonnés ayant une masse volumique apparente de 2200 à 2800 kg/m³, et les grains de laitier étant solidement cimentés les uns aux autres par des phases d'hydrogrenats formées dans un processus hydrothermique.

29. Elément de construction selon la revendication 28, **caractérisé par** des grosseurs de grain du laitier de 0 à 2 mm, de préférence de 0 à 1 mm, en particulier de 0 à 0,8 mm.

30. Elément de construction selon la revendication 29, **caractérisé par** une répartition granulométrique normale ou continue des grains de laitier.

31. Elément de construction selon une ou plusieurs des revendications 28 à 30, **caractérisé par** des résistances à la compression de 12 à 60 N/mm².

32. Procédé de fabrication d'éléments de construction, en particulier d'un élément de construction selon une ou plusieurs des revendications 28 à 31, **caractérisé par le fait**
**que** le laitier d'aciérie est fragmenté à des grosseurs de grain de 0 à 2 mm, en particulier 0 à 1 mm, de préférence 0 à 0,8 mm, et
est ensuite traité dans une atmosphère de vapeur saturée à température et pression élevées de façon telle que l'oxyde de calcium et l'oxyde de magnésium libres s'éteignent, tandis que les autres constituants hydratables restent à peu près non hydratés, et
**qu'**ensuite, le laitier conditionné de cette manière est mélangé avec une matière à l'état de farine contenant du SiO2 et avec de l'eau,
le mélange est façonné et
les corps façonnés qui en résultent sont soumis à autoclavage.

33. Procédé selon la revendication 32, **caractérisé par le fait que** le traitement à la vapeur saturée est effectué jusqu'à 200 °C au maximum.

34. Procédé selon la revendication 32 et/ou la revendication 33, **caractérisé par le fait que** le traitement à la vapeur saturée est effectué sous une pression de 8 à 16 bar.

35. Procédé selon une ou plusieurs des revendications 32 à 34, **caractérisé par le fait que** le traitement à la vapeur saturée est effectué de façon telle que plus de 95 % de l'oxyde de calcium libre soient éteints.

36. Procédé selon une ou plusieurs des revendications 32 à 35, **caractérisé par le fait qu'**avant et/ou pendant le traitement à la vapeur saturée, de l'eau est ajoutée au laitier.

37. Procédé selon la revendication 36, **caractérisé par le fait que** l'eau est ajoutée en quantité surstoechiométrique.

38. Procédé selon la revendication 37, **caractérisé par le fait qu'**il est utilisé une quantité d'eau correspondant à 1,1 à 1,3 fois, en particulier 1,2 à 1,8 fois la quantité d'eau stoechiométrique.

39. Procédé selon une ou plusieurs des revendications 32 à 38, **caractérisé par le fait que** le traitement à la vapeur saturée est effectué dans un autoclave.

40. Procédé selon une ou plusieurs des revendications 32 à 38, **caractérisé par le fait que** le traitement à la vapeur saturée est effectué dans un récipient mélangeur résistant à la pression, avec mélange continu ou périodique.

41. Procédé selon une ou plusieurs des revendications 32 à 40, **caractérisé par le fait qu'**immédiatement après le traitement à la vapeur saturée, le laitier conditionné est encore traité par addition d'au moins une matière contenant du SiO2 et d'eau ainsi que compression et autoclavage.

42. Procédé selon une ou plusieurs des revendications 32 à 41, **caractérisé par le fait qu'**au laitier sont ajoutés de la farine de quartz et/ou de la cendre volante et/ou de la farine de sable de laitier de préférence en des quantités de 5 à 50 % en masse, en particulier de 8 à 30 % en masse, principalement de 10 à 20 % en masse.

43. Procédé selon une ou plusieurs des revendications 32 à 42, **caractérisé par le fait que** les blocs crus sont durcis à 10 à 16 bar, de préférence à 11 à 14 bar de vapeur saturée.

44. Procédé selon la revendication 43, **caractérisé par le fait que** l'autoclavage dure jusqu'à 10 heures, de préférence de 6 à 8 heures._
